# EUROPEAN PATENT APPLICATION

(11) **EP 1 752 757 A2**
(43) Date of publication of application: **14.02.2007**
(21) Application number: 06118691.2
(22) Date of filing: 09.08.2006
(51) Int. Cl.: G01N 17/00

(54) **Portable weathering test apparatus**

(30) Priority: 10.08.2005 US 161633
(71) Applicant: Atlas Material Testing Technology, Llc., Chicago, Illinois 60613 (US)
(72) Inventor: MacIver, Phoenix, AZ 85087 (US); Farley, Joseph A., Black Canyon City, AZ 85324 (US)
(74) Representative: McCall, John Douglas

(57) **Abstract**

A portable weathering test apparatus (10) includes a portable housing (12), a specimen holder (24) disposed in the housing and configured to hold at least one test specimen (14), a mounting board (32) disposed in the housing at a distance from the specimen holder (24), an ultraviolet light source (16) disposed on the mounting board (32) and configured to emit ultraviolet radiation toward a testing surface of the specimen (14), and a power supply circuit (42) operatively coupled to a power supply and the ultraviolet light source.

## Description

### FIELD OF THE DISCLOSURE

The present disclosure generally relates to a weathering test apparatus, and more particularly, to a portable weathering test apparatus.

### BACKGROUND

Manufacturers of exterior coatings, such as paints and finishes, as well as plastics and other components which tend to degrade under exposure to solar radiation and other weathering effects, often want to know how such products will perform following years of exposure. However, such manufacturers typically require such information in a much shorter time than it would take to expose such materials to weathering effects under normal conditions. Accordingly, accelerated weathering test devices have been developed which accelerate the effects of weathering due to outdoor exposure in a much shorter time so that manufacturers need not actually wait five or ten years in order to determine how their products will hold up after five or ten years of actual outdoor exposure.

**[0001]** Indoor accelerated weathering test apparatus are known to test the accelerated aging characteristics of painted surfaces, fabrics, plastic sheeting and other materials. Such testing is accomplished by exposing the materials to be tested to high intensity radiation from an artificial light source that approximates sunlight, under conditions of controlled and sometimes high temperature and/or humidity inside a test chamber.

The above-described indoor accelerated weathering test apparatus typically include a large cabinet that houses a test chamber and various other components of the apparatus. The test chamber can accommodate a large number of test specimen for weathering tests. However, these indoor weathering test apparatus cannot be easily moved to another location. Portability of the weathering test apparatus can provide testing of specimens at any location. Additionally, because the test chamber of these apparatus can accommodate a large number of test specimens, testing a few specimens may be costly and inefficient.

Therefore, there exists a need in the art for a portable weathering test apparatus.

### BRIEF DESCRIPTION OF THE DRAWINGS

Certain embodiments are shown in the drawings. However, it is understood that the present disclosure is not limited to the arrangements and instrumentality shown in the attached drawings, wherein:

FIG. 1 illustrates is a perspective side view of a portable weathering test apparatus constructed in accordance with the teachings of the present disclosure;

FIG. 2 illustrates a perspective view of an interior of the portable weathering test apparatus of FIG. 1;

FIG. 3 illustrates a top view of an interior of the portable weathering test apparatus of FIG. 1; and

FIG. 4 illustrates a side view of the interior of the portable weathering test apparatus of FIG. 1.

### DETAILED DESCRIPTION

For the purposes of promoting and understanding the principles disclosed herein, reference will now be made to the preferred embodiments illustrated in the drawings and specific language will be used to describe the same. It will nevertheless be understood that no limitation of the scope is thereby intended. Such alterations and further modifications in the illustrated device and such further applications are the principles disclosed as illustrated therein as being contemplated as would normally occur to one skilled in the art to which this disclosure relates.

In accordance with one principal aspect of the present disclosure, a weathering test apparatus includes a portable housing, a specimen holder disposed in the housing and configured to hold at least one test specimen, a mounting board disposed in the housing at a distance from the specimen holder, an ultraviolet light source disposed on the mounting board and configured to emit ultraviolet radiation toward a testing surface of the specimen, and a power supply circuit operatively coupled to a power supply and the ultraviolet light source.

In accordance with another principal aspect of the present disclosure, a weathering test apparatus includes a portable housing, a specimen holder disposed in the housing and being accessible from outside the housing, the specimen holder configured to hold at least one test specimen, a mounting board disposed in the housing, at least one ultraviolet light source disposed on the mounting board, the ultraviolet light source configured to emit ultraviolet radiation toward the specimen, a power supply circuit disposed in the housing and operatively coupled to a power source, the power supply circuit operatively coupled to the ultraviolet light source to provide power to the ultraviolet light source, and a cooling system operatively coupled to an interior of the housing.

In accordance with another principal aspect of the present disclosure, a method of weathering testing includes placing a test specimen in a specimen holder disposed inside a portable housing, the specimen holder being accessible from outside of the housing, powering an ultraviolet light source mounted to a mounting board disposed in the housing, the ultraviolet light source positioned relative to the specimen holder, emitting ultraviolet radiation toward the test specimen with the ultraviolet light source, diffusing the ultraviolet radiation emitted from the ultraviolet light source toward the test specimen with a diffuser disposed between the ultraviolet light source and the specimen holder, and cooling an interior of the housing.

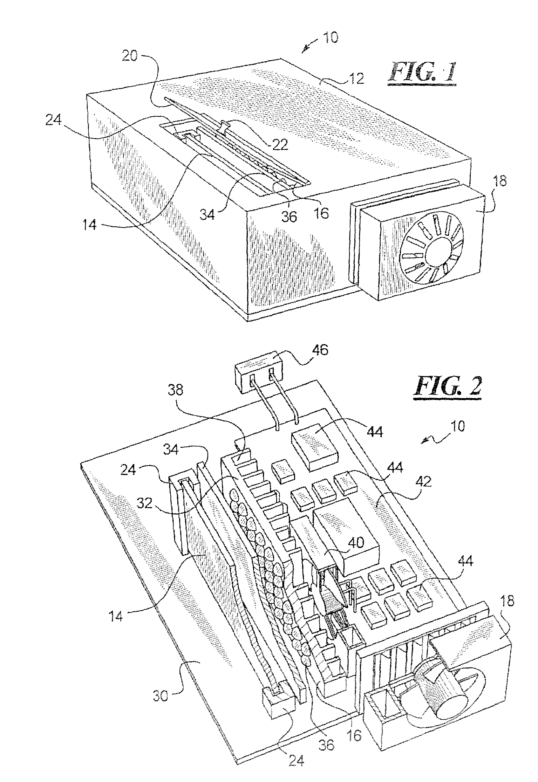

Referring to FIG. 1, a weathering test apparatus 10 constructed in accordance with the teachings of the present disclosure is shown. The apparatus 10 includes a portable housing 12, in which a test specimen 14 can be placed to expose the tests specimen 14 to ultraviolet radiation from at least one ultraviolet light source 16. The portable housing 12 includes an external fan 18 to control the temperature of the interior of the housing 12. An access panel 20 is disposed on the housing 12 that can pivot to provide access to the interior of the housing when desired. The access panel 20 includes a handle 22 that an operator can hold to open and close the access panel 20. When the access panel 20 is opened, the specimen 14 can be placed inside the housing and held by specimen holders 24. The specimen 14 can also be easily removed through the access panel 20.

Referring to FIGS. 2-4, the interior components of the apparatus 10 are shown in detail. The specimen 14 is typically rectangular. Accordingly, the specimen holders 24 may be shaped as a pair of spaced apart channels that can receive the end portions of the test specimen 14 to hold the test specimen 14 in place during weathering tests. The apparatus 10 includes a support base 30 on which the specimen holders 24 and the various herein described components of the apparatus 10 may be mounted for support.

The ultraviolet light source 16 is supported by a mounting board 32 that is generally mounted on the support base 30 in parallel with the specimen holders 24. The ultraviolet light source 16 is positioned on the mounting board 32 such that it directs ultraviolet radiation toward the specimen 14. To provide uniform distribution of the ultraviolet radiation on the test specimen 14, a diffuser 34 may be disposed between the ultraviolet light source 16 and the specimen holders 24. The ultraviolet light source 16 may be configured as a single ultraviolet light source 16 or a plurality of ultraviolet light sources 36, which may be configured as light emitting diodes, organic light-emitting diodes or other solid state ultraviolet light source.

The ultraviolet light source 16 generates heat, and therefore can raise the temperature of the mounting board 32 and the interior of the housing 12. Additionally, the temperature of the test specimen 14 may be affected by the heat from the ultraviolet light source 16. To cool the mounting board 32 and the ultraviolet light source 16, the apparatus 10 includes a heat sink 38 that is attached to the back side of the mounting board 32. The heat sink 38 provides conduction cooling for the mounting board and the ultraviolet light source 16. To increase the cooling rate provided by the heat sink 38, the apparatus 10 can also include an inner fan 40 that is positioned in the housing 12, and may be attached to the support base 30, such that it provides air flow towards the heat sink 38. Accordingly, the inner fan 40 provides convection cooling for the heat sink 38, thereby providing additional cooling to the mounting board 32 and the ultraviolet light source 16.

The apparatus 10 includes a power supply circuit 42 that provides power to the various components of the apparatus 10 and controls the operation of the apparatus 10. The power supply circuit 42 may include a number of application specific integrated circuits and various electronic components that are generally shown by reference number 44. The electronic components 44 can provide power to the ultraviolet light source 16, the fans 18 and 40, and other components of the apparatus 10 that may need electrical power. The power supply circuit 42 may be mounted on the support base 30.

Although not shown, the power supply circuit 42 may simply be integrated with the support base 30 such that the support base 30 is a circuit substrate on which the various components 44 of the power supply circuit 42 are mounted and connected. In the disclosed examples, however, the power supply circuit 42 is shown to be separate from the support base 30.

Power supply circuit 42 receives power from an external power source through a power plug 46. The power plug 46 is accessible from the outside of the housing 12, and may simply be an electrical plug that is used in typical household appliances and other consumer electronic devices. Accordingly, the power plug 46 can receive power from any power source through an extension cord or the like that can connect the power plug 46 to the power source (not shown, i.e., a wall outlet).

As stated in the foregoing, the power supply circuit 42 also includes components that control the weathering testings of the specimen 14. Accordingly, the power supply circuit 42 may control the output of the ultraviolet light source 16 to control the irradiance on the specimen 14. The power supply circuit 42 may also control the temperature inside the housing 14 to thereby control the temperature of the test specimen 14. Although not shown, the apparatus 10 may include a variety of temperature sensors disposed in the housing 12 so as to determine the temperature of the interior of the housing 12 and the temperature of the specimen 14. Such temperature readings from the sensors can be conveyed to the power supply circuit 42. The power supply circuit 42 can then control the operation of the inner fan 40 and the outer fan 18 to control the temperature of the interior of the housing 12.

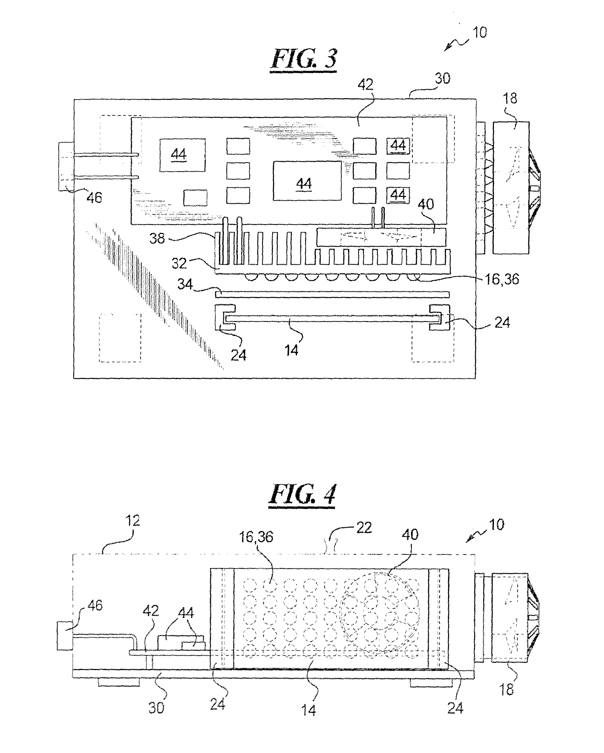

Referring to FIGS. 1 and 4, the housing 12 is sized so as to enable portability thereof by an operator. The housing 12 is light sealed so as to reduce light leakage from therein for consistent testing of the specimen 14, i.e. subjecting the specimen 14 to consistent irradiance from the ultraviolet light source 16. Additionally, the housing 12 may be weatherproof so as to provide consistent control of the environment of the interior of the housing 12 without any outside disturbances.

Furthermore, while the particular preferred embodiments have been shown and described, it will be obvious to those skilled in the art that changes and modifications may be made without departing from the teaching of the disclosure. The matter set forth in the foregoing description and accompanying drawings is offered by way of illustration only and not as limitation. The actual scope of the disclosure is intended to be defined in the following claims when viewed in their proper perspective based on the related art.

## Claims

1. A weathering test apparatus comprising:
a portable housing;
a specimen holder disposed in the housing and configured to hold at least one test specimen;
a mounting board disposed in the housing at a distance from the specimen holder;
an ultraviolet light source disposed on the mounting board and configured to emit ultraviolet radiation toward a testing surface of the specimen; and
a power supply circuit operatively coupled to a power supply and the ultraviolet light source.

2. A weathering test apparatus as claimed in claim 1, wherein the ultraviolet light source is selected from the group consisting of:
organic light emitting diodes, light emitting diodes or solid state ultraviolet devices.

3. A weathering test apparatus as claimed in claim 1 or 2, wherein the power supply circuit is disposed inside the housing.

4. A weathering test apparatus as claimed in claim 3, further comprising a power plug disposed on the housing and operatively coupled to the power supply circuit, wherein the power supply circuit receives power from the power source through the power plug.

5. A weathering test apparatus as claimed in any one of the preceding claims, further comprising a cooling system operatively coupled to an interior of the housing.

6. A weathering test apparatus as claimed in claim 5, wherein the cooling system comprises a heat sink operatively coupled to the mounting board.

7. A weathering test apparatus as claimed in claim 5, wherein the cooling system comprises a fan operatively coupled to the mounting board.

8. A weathering test apparatus as claimed in claim 5, further comprising a cooling fan attached over an aperture on the housing.

9. A weathering test apparatus as claimed in any one of the preceding claims, further comprising a diffuser disposed between the ultraviolet light source and the specimen holder.

10. A weathering test apparatus as claimed in any one of the preceding claims, wherein the housing is light sealed.

11. A weathering test apparatus as claimed in any one of the preceding claims, wherein the housing is weather proof.

12. A weathering test apparatus comprising:
a portable housing;
a specimen holder disposed in the housing and being accessible from outside the housing, the specimen holder configured to hold at least one test specimen;
a mounting board disposed in the housing;
at least one ultraviolet light source disposed on the mounting board, the ultraviolet light source configured to emit ultraviolet radiation toward the specimen;
a power supply circuit disposed in the housing and operatively coupled to a power source, the power supply circuit operatively coupled to the ultraviolet light source to provide power to the ultraviolet light source; and
a cooling system operatively coupled to an interior of the housing.

13. A weathering test apparatus as claimed in claim 12, wherein the ultraviolet light source is selected from the group consisting of:
organic light emitting diodes, light emitting diodes or solid state ultraviolet devices.

14. A weathering test apparatus as claimed in claim 12 or 13, further comprising a power plug disposed on the housing and operatively coupled to the power supply circuit, wherein the power supply circuit receives power from the power source through the power plug.

15. A weathering test apparatus as claimed in claim 12, 13 or 14, wherein the cooling system comprises a heat sink operatively coupled to the mounting board.

16. A weathering test apparatus as claimed in any one of claims 12 to 15, wherein the cooling system comprises a fan operatively coupled to the mounting board.

17. A weathering test apparatus as claimed in any one of claims 12 to 16, further comprising a cooling fan attached over an aperture on the housing.

18. A weathering test apparatus as claimed in any one of claims 12 to 17, further comprising a diffuser disposed between the ultraviolet light source and the specimen holder.

19. A weathering test apparatus as claimed in any one of claims 12 to 18, wherein the housing is light sealed.

20. A weathering test apparatus as claimed in any one of claims 12 to 19, wherein the housing is weather proof.

21. A method of weathering testing, the method comprising:
placing a test specimen in a specimen holder disposed inside a portable housing, the specimen holder being accessible from the outside of the housing;
powering an ultraviolet light source mounted to a mounting board disposed in the housing, the ultraviolet light source positioned relative to the specimen holder;
emitting ultraviolet radiation toward the test specimen with the ultraviolet light source;
diffusing the ultraviolet radiation emitted from the ultraviolet light source toward the test specimen with a diffuser disposed between the ultraviolet light source and the specimen holder; and
cooling an interior of the housing.

22. A method as claimed in claim 21, wherein the ultraviolet light source is selected from the group consisting of:
organic light emitting diodes, light emitting diodes or solid state ultraviolet devices.

23. A method as claimed in claim 21 or 22, wherein the cooling comprises generating air flow inside the housing with a cooling fan attached over an aperture on the housing.

24. A method as claimed in any one of claims 21 to 23, wherein the cooling comprises cooling the mounting board with a heat sink operatively coupled to the mounting board.

25. A method as claimed in any one of claims 21 to 24, wherein the cooling comprises cooling the mounting board with a fan operatively coupled to the mounting board.
